# EUROPEAN PATENT APPLICATION

(11) **EP 4 613 474 A1**
(43) Date of publication of application: **10.09.2025**
(21) Application number: 23884800.6
(22) Date of filing: 30.10.2023
(51) Int. Cl.: B32B 3/30, B32B 33/00, B44C 5/04

(54) **OPTICAL DECORATIVE FILM FOR VEHICLE, AND OPTICAL TRIM ASSEMBLY FOR INTERIOR OF VEHICLE**

(30) Priority: 31.10.2022 CN 202211350723
(71) Applicant: Yanfeng International Automotive Technology Co., Ltd., Shanghai 201306 (CN)
(72) Inventor: ZHANG, Jixiang, Shanghai 201315 (CN)
(74) Representative: Meissner Bolte Partnerschaft mbB
(86) International application number: PCT/CN2023/127546
(87) International publication number: WO 2024/093868

(57) **Abstract**

The invention discloses an optical decorative film for vehicles comprising a base layer, a textured structure, and a light-focusing structure. A localized light-focusing area on the film's upper surface exhibits higher light transmittance than peripheral regions when illuminated by an underlying backlight source, creating distinct surface effects. The textured structure generates varied visual textures under ambient light, while the light-focusing structure enhances brightness and transmittance under backlight conditions. When integrated into a vehicle interior trim assembly with embedded backlight sources, the film provides dynamic optical effects, improving aesthetic appeal and user comfort. The combined structures enable dual functionality: ambient light-driven decorative patterns and backlight-enhanced illumination, offering versatility in design. This configuration optimizes visual contrast between lit and non-lit areas, ensuring high clarity and uniform light distribution. The invention enhances interior trim assemblies by merging functional and decorative elements, delivering adaptable lighting solutions for automotive applications.

## Description

### TECHNICAL FIELD

The present invention relates to the technical field of optical trim, and more particularly to an optical decorative film suitable for use in a vehicle and an optical trim assembly having the optical decorative film.

### BACKGROUND ART

With the rapid development of the automobile industry and the increasing demand of consumers for vehicle functions, consumers tend to focus more on appearance of components in the vehicle, and decorative films are increasingly used in automobile trims.

Conventional decorative films form patterns by, for example, coating on the film by ink printing technology, and the pattern texture is relatively poor due to the limitation of ink material, and it is difficult to obtain a pattern visual effect with rich layers because a single coating of a single color is usually used. In some designs, the decorative film is formed as an optical trim in combination with a backlight source to enhance the decoration of the pattern, but there is a contradiction between satisfying the optical effect and the backlight effect due to the superposition of the coating, and it is difficult to ensure the light transmittance of the film if the effect of the film such as high gloss is ensured. Thus, existing decorative films do not meet the experience needs of manufacturers and consumers for diversified optical effects.

### SUMMARY OF THE INVENTION

It is an object of the present invention to provide an optical decorative film for vehicles, which has an improved overall light transmittance and can present different surface effects in different areas, and which can obtain a rich visual effect in layers by different designs of each film layer of the film. When the optical decorative film is applied to the optical trim assembly, by integrating different functional components, it can meet the diversified needs of the consumers and improve the user experience.

In this regard, according to one aspect of the present invention, an optical decorative film for vehicles is provided, the optical decorative film including: a base layer; a textured structure; and a light-focusing structure; where at least a local area on the upper surface of the optical decorative film is configured as a light-focusing area, and light emitted by a backlight source located below the optical decorative film passes through the light-focusing structure, so that the light-focusing area has increased light transmittance compared with the peripheral area of the light-focusing area, so as to present different surface effects on the upper surface of the optical decorative film.

According to the above technical concept, the present invention may further include any one or more of the following alternative forms.

In some alternatives, a peripheral area of the light-focusing area is light-transmissive or opaque.

In some alternatives, an upper surface of the optical decorative film is provided with a plurality of light-focusing areas each having the same or different light transmittance.

In some alternatives, regional area of an upper surface of the optical decorative film covered by each of the light-focusing areas is the same or different.

In some alternatives, the textured structure includes an optical adhesive attached to the base layer by transfer or imprinting.

In some alternatives, the textured structure is formed on one surface of the base layer.

In some alternatives, the light-focusing area is formed on the textured structure, the textured structure of the light-focusing area is smaller than that of the peripheral area, or the light-focusing area has no textured structure.

In some alternatives, the optical decorative film further includes a plating layer attached to the surface of the textured structure.

In some alternatives, the light-focusing structure is formed in any one of the textured structure, the base layer, and the plating layer.

In some alternatives, the light-focusing structure includes at least one of: (1) a micro-nano lens; and (2) micro-nano particles attached to at least a local area of the textured structure.

In some alternatives, the micro-nano lens is attached to a surface of any one of the textured structure, the base layer, and the plating layer.

In some alternatives, the micro-nano lens includes any one of a convex lens, a concave lens, and a Fresnel lens.

In some alternatives, the micro-nano lens is a Fresnel lens attached to a surface of any one of the textured structure, the base layer, and the plating layer by optical adhesive transfer or imprinting or secondary transfer.

In some alternatives, the micro-nano particles include injection molded particles, metal particles, glass particles.

In some alternatives, the plating layer includes a single-layer film or is formed by laminating a plurality of film layers.

In some alternatives, when the plating film layer is the single-layer film, a local area of the single-layer film is an oxide medium, and a peripheral area of the local area is a metal medium or a mixed medium of a metal medium and an oxide medium; when the plating film layer is the plurality of film layers, and the plurality of film layers include at least one layer of an oxide medium and at least one layer of a metal medium or a mixed medium of a metal medium and an oxide medium.

In some alternatives, the light-focusing area includes an open groove formed on the textured structure to form a first light-focusing area, and a second light-focusing area formed on the plating layer, the second light-focusing area corresponds to a position of the first light-focusing area and the material of the second light-focusing area is embedded in the first light-focusing area.

In some alternatives, the base layer is formed with a light-focusing area having a high light transmittance compared to that of a peripheral area, or the light-focusing area is formed by means of opening.

In some alternatives, the textured structure includes a plurality of grooves configured to have different depths, shapes or surface areas.

In some alternatives, the surface effect includes at least one of brushed texture, grid texture, gradient texture, starry sky texture, imitation stone texture, wood grain texture, fabric texture, landscape texture, crystal texture, lens texture, stereoscopic relief, characters, graphics, symbols, numbers, beacons, and trademarks.

The optical decorative film provides at least one of the following optical effects:
(a) a projection effect and/or a decorative effect and/or a color effect and/or a pattern effect and/or a surface effect provided by the optical decorative film, and/or (b) a depth-of-field effect and/or a decorative effect and/or a color effect and/or a pattern effect and/or a surface effect provided by an upper surface of the optical decorative film, and/or (c) an illumination effect provided by the backlight source, and/or (d) light emitted by the backlight source transmits the illumination effect provided by the optical decorative film, and/or (e) the illumination effect provided by the light emitted by the backlight source through the optical decorative film and the upper surface, and/or
(f) a daytime effect, and/or (g) a night effect.

According to another aspect of the present invention, an optical trim assembly used for the interior of a vehicle is provided, where the optical trim assembly includes The optical decorative film, and a substrate, where the substrate is attached to at least one surface of the optical decorative film by integral injection molding or optical adhesive.

In some alternatives, the optical trim assembly further includes a backlight source arranged on a side of the substrate remote from an observer, the backlight source emitting light through the optical decorative film to present different surface effects in a light-focusing area and a peripheral area of the optical decorative film.

By providing the textured structure and the light-focusing structure on the optical decorative film, the optical decorative film can present different texture effects or decorative effects under external ambient light irradiation. The light transmittance of the optical decorative film is improved under backlight conditions, and the brightness of the optical decorative film is improved. When the optical decorative film is applied to the optical trim assembly, by integrating functional components such as a backlight source, rich and variable optical effects are further provided, and the attractiveness and comfort of the optical trim assembly during use are improved. The optical decorative film and the optical trim assembly of the present invention can be applied to various occasions to meet the diversified needs of consumers.

### BRIEF DESCRIPTION OF THE DRAWINGS

Other features and advantages of the present invention will be better understood by the alternative embodiments described in detail below in conjunction with the accompanying drawings, in which like numerals designate like or similar parts, where:
- FIG. 1A: is an overall schematic diagram showing the exterior of a vehicle;
- FIG. 1B: is a schematic diagram showing the interior of a vehicle, which shows various suitable locations at which an optical trim assembly may be arranged;
- FIG. 1C: is a schematic diagram showing another visual angle of the interior of a vehicle, which shows suitable locations where the optical trim assembly may be arranged;
- FIG. 2: is a schematic diagram showing an optical decorative film according to an embodiment, which shows a textured structure;
- FIG. 3: is a schematic diagram showing an optical decorative film according to another embodiment, which shows a plating layer;
- FIG. 4: is a schematic diagram showing an optical decorative film according to another embodiment, which shows a pattern layer;
- FIG. 5: is a schematic diagram showing an optical decorative film according to another embodiment, which shows a color layer;
- FIG. 6: is a schematic diagram showing an optical decorative film according to another embodiment, which shows a protective layer;
- FIG. 7: is a schematic diagram showing an optical trim assembly according to one embodiment;
- FIG. 8: is a schematic diagram showing a surface effect of a beacon pattern presented by an optical decorative film according to an embodiment;
- FIG. 9A, similar to FIG. 2,: shows a schematic diagram showing an optical decorative film according to an embodiment of the present invention with a textured structure attached with a Fresnel lens to form a light-focusing structure;
- FIG. 9B: is a schematic diagram showing an optical decorative film according to another embodiment of the present invention, which shows a Fresnel lens attached to a base layer;
- FIG. 10: is a schematic diagram showing an optical trim assembly according to an embodiment of the present invention, which shows a Fresnel lens attached to a textured structure and a backlight source;
- FIG. 11, similar to FIG. 10,: shows a Fresnel lens attached to a plating layer;
- FIG. 12A: is a schematic diagram showing light from a backlight source passing directly through a textured structure;
- FIG. 12B: is a schematic diagram showing lights of a backlight source passing through a textured structure via a Fresnel lens;
- FIG. 12C: is a schematic diagram showing a textured structure having a plurality of Fresnel lenses disposed thereon, and light from a backlight source passing through a textured structure via a Fresnel lenses;
- FIG. 13: is a schematic diagram showing light-focusing structure according to another embodiment, which shows micro-nano particles attached to local areas of a textured structure;
- FIG. 14: is a schematic diagram showing an optical trim assembly according to another embodiment of the present invention, which shows a light-focusing area formed on a base layer, a textured structure, a plating layer, and a backlight source; and
- FIG. 15: is a schematic diagram showing formation of a light-focusing area on a textured structure and a plating layer according to another embodiment.

### DETAILED DESCRIPTION OF THE INVENTION

The implementation and use of the embodiments are discussed in detail below. It is to be understood, however, that the specific embodiments discussed are merely illustrative of specific ways of carrying out and using the present invention, and are not intended to limit the scope of the present invention. In the description, the structural positions of the respective components, such as upper, lower, top, bottom, etc., are not absolute, but relative. When the individual components are arranged as shown in the drawings, these directional expressions are appropriate, but when the positions of the individual components in the drawings are changed, these directional expressions also change accordingly.

Herein, the expression "comprise" or similar expressions synonymous thereof such as "include", "contain" and "have" are open-ended and do not exclude additional unrecited elements, steps or ingredients.

Herein, the terms "first", "second" etc. are not used to limit the sequence and number of components unless otherwise indicated.

Herein, the meaning of "a plurality" and "layers" means two or more unless otherwise explicitly and specifically defined.

Herein, "outer" and "inner" are directions relative to an observer, "outer" refers to a direction facing the observer, and "inner" refers to a direction away from the observer.

Herein, unless specifically defined otherwise, terms such as "mounted", "connected", and "attached" are to be understood broadly, for example, as fixed connections, detachable connections, or integral; it can be directly connected, or indirectly connected through an intermediate medium, or it can be internal communication of two elements or interaction between two elements. For a person skilled in the art, the specific meaning of the above terms herein may be appreciated according to specific situations.

It should be understood that the term "vehicle" referred to herein includes, but is not limited to, a vehicle, a watercraft, an airplane, etc., where the "vehicle" includes a fuel vehicle, a hybrid vehicle, an electric vehicle, a hydrogen vehicle, etc., and may be a variety of vehicle types, such as a small car, a bus, a rail vehicle, etc., and is not limited to the illustration. In some embodiments described below, the application of the optical decorative film and the optical trim assembly to a small automobile as a vehicle trim does not exclude the application of the present invention to other types of vehicles or other applicable scenes.

In the various embodiments described, unless otherwise specified, the thickness of each layer structure in the optical decorative film is within a range of thicknesses generally suitable for use in the art and are not limited to those shown in the figures. Furthermore, although the drawings are shown as substantially planar superimposed film layers, the film layers of the present invention may also be curved. In some cases not described here, special coating or film layers may be used for the surface of the optical trim assembly to provide functions such as durability and/or comfort.

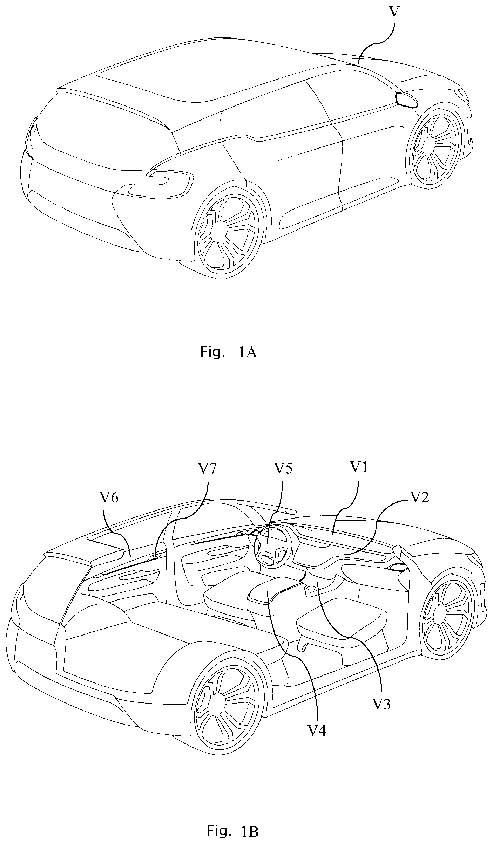

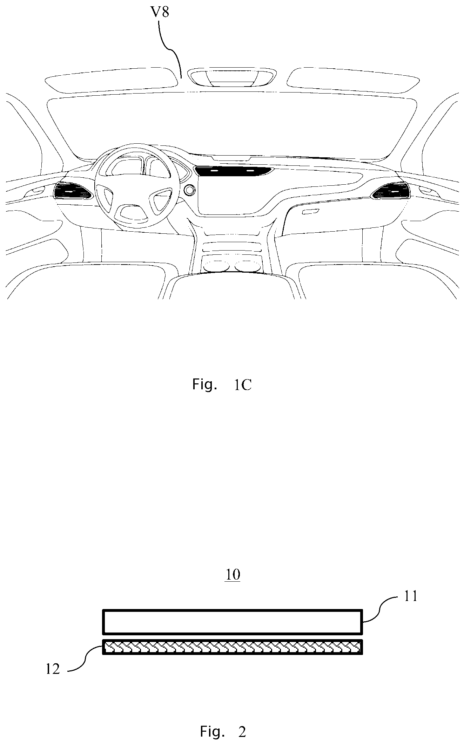

FIGS. 1A to 1C show an example of an optical trim assembly applied to a small car V as a vehicle trim. The optical trim assembly is arranged on, for example, any one of an upper instrument panel trim panel V1, a lower instrument panel trim panel V2, a central control trim panel V3, a sub-instrument panel V4, a steering wheel V5, a door side trim panel V6, and a door handle V7 as shown in FIG. 1B, and the roof trim panel V8 as shown in FIG. 1C. It should be understood that the optical trim assembly may also be arranged at any other unidentified location within the vehicle as desired.

Existing optical decorative films are typically printed with ink to form a pattern, or combined with the texture of the decorative panel surface (e.g., wood grain or marble grain) to present a decorative texture effect on the panel surface. When a light source is incorporated, it is also possible to obtain a changed pattern visual effect by lighting a light source to reveal the pattern or turning off the light source to hide the pattern. However, with the increasing development of intelligent vehicles and consumers' increasing demand for comfort and attractiveness, the existing optical decorative film is not satisfactory in practice and experience, and it is also expected to obtain richer visual effects such as three-dimensional effects and dynamic pattern changes.

In this regard, according to a concept of the present invention, an optical decorative film for vehicles is provided, the optical decorative film including: a base layer; a textured structure; and a light-focusing structure; where at least a local area on the upper surface of the optical decorative film is configured as a light-focusing area, and light emitted by a backlight source located below the optical decorative film passes through the light-focusing structure, so that the light-focusing area has increased light transmittance compared with the peripheral area of the light-focusing area, so as to present different surface effects on the upper surface of the optical decorative film.

It should be understood that the textured structure refers to a micron-scale or even nanometer-scale 3D microstructure, such as a microscopic V-shaped groove, an arc-shaped groove or a concave structure form, or a raised protrusion structure form, which can be formed to imitate a three-dimensional texture effect, a relief effect, etc., preferably by optical adhesive transfer or imprinting on at least one surface, depending on various needs, and the textured structure may also be produced by machining or chemical etching or photolithography or other processes that can achieve the same purpose. Here, the surface on which the textured structure is arranged includes, but is not limited to, the surface of the base layer, and/or the surface of the individual optional film layers constituting the optical decorative film, and/or the surface of the textured structure itself in the form of the film layer. Further, an upper surface of the optical decorative film refers to the surface generally facing an observer.

Thus, by providing a textured structure as well as a light-focusing structure, the optical decorative film of the present invention is configured to present different surface effects on the upper surface under external ambient light irradiation, and to have enhanced light transmittance under the irradiation of a backlight source, thereby providing a rich-layered decorative effect. As an example, the surface effect includes at least one of brushed texture, grid texture, gradient texture, starry sky texture, imitation stone texture, wood grain texture, fabric texture, landscape texture, crystal texture, lens texture, stereoscopic relief, characters, graphics, symbols, numbers, beacons, and trademarks. Preferably, the textured structure includes a plurality of texture units, textures of the texture units are different, so that the upper surface of the optical decorative film presents different surface effects at different visual angles. When the light source is lighted in combination, the optical decorative film of the present invention can also present a changing light effect even if the observation area is fixed by the distribution of the position of the light source and/or the proportion of different light sources (color, light intensity, etc.), thereby creating an unpredictable and distinctive decorative effect.

The optical decorative film 10 of one embodiment as shown in connection with FIG. 2 includes a base layer 11 and a textured structure 12 attached to the base layer 11. The base layer 11 includes any one of glass, plastic, wood veneer, film, leather, and may be configured to have a color according to actual needs. As an alternative, the base layer 11 may be polycarbonate (PC), or polymethyl methacrylate (PMMA), polyethylene terephthalate (PET), polyolefin (PO), polyvinyl chloride (PVC), ethylene-vinyl acetate copolymer (EVA), and other suitable composite plastics. The textured structure 12 may be selected as a resin type material or a solvent type material, such as an optical adhesive of any one of a photo-curable adhesive (UV adhesive), a thermosetting adhesive, an unsaturated polyester adhesive, an epoxy adhesive, a polyurethane adhesive, a silicone adhesive, and in some embodiments, the optical adhesive may be attached to the base layer 11 by transfer or imprinting, and a textured structure may be formed on at least one surface, that is, a textured structure may be formed on the surface facing the base layer 11 and/or on the surface facing away from the base layer 11. As an alternative, the textured structure, for example in the form of an optical adhesive, may be in the form of a film layer having a film thickness of 1 to 999 nm, preferably 20 to 100 nm; or a film thickness of 1 to 999 micrometers, preferably 20 to 100 micrometers. In most cases, the textured structure can adopt a transparent film layer. In some embodiments, such as where the textured structure is formed by UV adhesive transfer or imprinting, the UV adhesive may itself be colored, and the UV adhesive layer of the micro-nano structure may be colored by the addition of a colorant to impart a color change to the visual effect presented. In the shown embodiment, an observer may observe the varying texture effect from an outer surface of the base layer 11 of the optical decorative film 10 facing away from the textured structure 12 (i.e., above FIG. 2), and it will be understood that the texture effect may also be observed in some occasions on an inner surface of the textured structure 12 facing away from the base layer 11 (i.e., below FIG. 2).

In some embodiments, unlike the textured structure 12 in the form of a film layer described above, the textured structure may be formed on one surface of the base layer. For example, it is formed on the surface of the base layer by an in-mold decoration technique (IMD). In the following embodiments, a textured structure in the form of a film layer is described as an example unless otherwise specified.

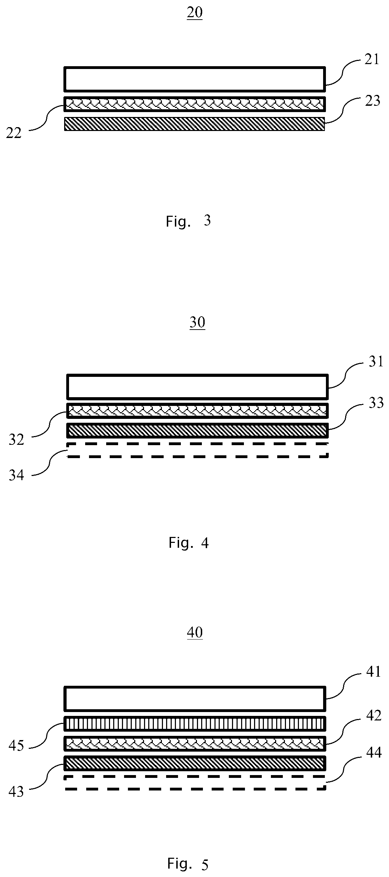

In another embodiment as shown in FIG. 3, the optical decorative film 20 further includes a plating layer 23 in addition to a base layer 21 and a textured structure 22 attached to the base layer 21. As a highly reflective film layer, the plating layer 23 is preferably arranged on a surface of the textured structure 22, but is not limited thereto, and may be arranged on the surface without the textured structure in some occasions. As an alternative, the plating layer may be a physical vapor deposition (PVD) film layer formed by a vacuum plating technique such as evaporation plating or magnetron sputtering plating, and may be selected as a single-layer film or is formed by laminating a plurality of film layers, and the film thickness may be selected from 10 to 50 microns. The plating layer includes a metal plating layer and a non-metal plating layer or an oxide plating layer. As an alternative, the plating layer may be a metal plating layer material such as indium or tin, or a non-metal or oxide plating layer material such as silicon dioxide, carbon dioxide and nitrogen. The plating layer typically has a metallic gloss, thereby increasing the gloss of the film and providing it with a metallic technical appearance. In some embodiments, the plating layer may also have a color.

In another embodiment as shown in FIG. 4, the optical decorative film 30 further includes a pattern layer 34 in addition to a base layer 31 and a textured structure 32 attached to the base layer 31. In this embodiment, the pattern layer 34 is attached to the textured structure 32 via the plating layer 33. In this manner, by adjusting the thickness and light transmittance of the plating layer 33, it is possible to realize the hiding characteristics of the pattern on the pattern layer 34. For example, the pattern of the pattern layer is hidden without backlight, where backlight means that the light source is arranged on the side of the pattern layer 34 facing away from the plating layer 33, that is, below FIG. 4, so that incident light propagates toward the plating layer 33 and the textured structure 32. The pattern layer may be a single-layer film or coating or may be stacked from a plurality of film layers. In some embodiments, the ink material forming the pattern may have a color to increase a varying level of visual effect.

As described above, the optical decorative film may have a color effect by the color characteristics of the base layer and/or the textured structure and/or the plating layer and/or the pattern layer itself, and in some embodiments, the color effect may also be obtained by a separate color layer. As an alternative, the color layer is attached between two any adjacent layers of the base layer, the textured structure, the plating layer, and the pattern layer.

FIG. 5 shows an optical decorative film 40 according to an embodiment in which a color layer 45 is attached to the surface of the textured structure 42, for example sandwiched between the base layer 41 and the textured structure 42, so that the color effect is directly visible on the outer surface of the base layer 41. The color layer may be a single-layer film or coating or formed by laminating a plurality of film layers, and may realize a single color (such as blue, green, dark green, etc.) or a plurality of colors by printing or offset printing technology, or may be a gradient color, such as gradually transitioning from white to green, or gradually transitioning from black to color (such as green, blue, etc.) and then transitioning to white, etc. For example, the color layer may be selected as an ink layer, and the layer thickness may be from 1 to 100 microns, preferably from 10 to 50 microns. By providing the color layer 45, the bright color appearance effect of the optical decorative film 40 is increased, and combined with the textured structure 42 and the plating layer 43/pattern layer 44, a richer light effect is presented.

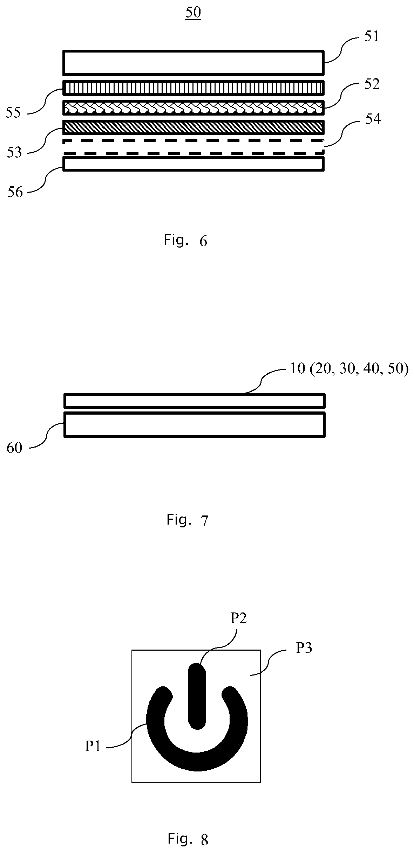

In the embodiment as shown in FIG. 6, the optical decorative film 50 includes a base layer 51 and a textured structure 52 attached to the base layer 51, and a plating layer 53 attached to the textured structure 52 and a pattern layer 54 attached to the plating layer 53, and a color layer 55 is arranged between the base layer 51 and the textured structure 52. In addition, a protective layer 56 is provided below the pattern layer 54 to provide durability and reliability in use. As such, the optical decorative film 50 is integrally constructed as a film having a textured structure, a pattern and a color, and the film has a high gloss metallic texture and a brilliant color. Under the ambient light condition, the optical decorative film 50 has texture effects and color effects, and under the backlight condition, the optical decorative film 50 can show texture effects and color effects, and at the same time, it can also show the pattern hidden under the plating layer 53 to realize different light effects of the optical decorative film under the conditions of no backlight and backlight. Compared with the existing design, the optical decorative film of the present invention provides unique decorative effects, including but not limited to texture effects, high gloss metallic texture, brilliant colors, invisible patterns, etc., and brings a new visual experience to consumers.

The optical decorative films 10, 20, 30, 40, and 50 in each of the above-described embodiments can be integrally injection molded into an optical trim assembly with a substrate, e.g., a plastic material by an in-mold decoration technique (IMD), such as in-mold insert injection molding (IML), etc., as shown in FIG. 7, a substrate 60 is integrally injection molded to the surface of the optical decorative film. As an alternative, the substrate and the optical decorative film may be connected by an optical adhesive. The substrate 60 may be injection molded on the outer surface or the inner surface of the optical decorative film when the optical effect is satisfied, depending on various needs. The substrate 60 may be selected from a suitable material such as PC, PMMA, ABS, etc. Accordingly, the optical trim assembly is suitable for mass production to save production costs, and can be widely used in various occasions, including but not limited to trims in the vehicles, and can meet different decoration needs of consumers in limited space.

Due to the fact that the optical decorative film has a certain degree of attenuation in the light transmittance of each structural layer after being stacked by a plurality of structural layers, and some structural layers (e.g., plating layers) have a high reflection property while having a low light transmittance, there is a conflict with the decorating requirement that the film as a whole pursues a high light transmittance and presents texture and/or pattern. In order to satisfy the high light transmission requirements required for the surface effect which the film finally presents and to make the visual effects such as textures and/or patterns clearer, the optical decorative film of the present invention is provided with a light-focusing structure, and at least a local area of the upper surface of the film is configured as a light-focusing area, and the light emitted from the light source located at the lower surface of the optical decorative film passes through the light-focusing structure, so that the light-focusing area has an increased light transmittance compared to the peripheral area of the light-focusing area. In this manner, for different design requirements, visual effects such as textures and/or patterns presented in the light-focusing area have significantly different surface effects compared to the peripheral area, thereby facilitating the appearance of decorative effects such as text, graphics, symbols, numbers, beacons, trademarks, etc.

In some embodiments, the upper surface of the optical decorative film is provided with a plurality of light-focusing areas, and the light transmittance of each light-focusing area is the same or different. Here, the light transmittance may be selected from any one of 10% to 20%, 20% to 30%, 30% to 40%, 40% to 50%, 50% to 60%, 60% to 70%, and 70% to 80%.

In some embodiments, the areas of the upper surface of the optical film covered by each of the plurality of light-focusing areas are the same or different.

As used herein, a "light-focusing area" refers to an area where incident light emitted by a backlight source may be focused, thus enhancing the light transmittance of the film in the area. The focused light can be achieved by means of a light-focusing element having a light-focusing structure, or by means of a light-focusing structure designed for each structural layer in the film itself. It is to be understood here that the peripheral area of the light-focusing area may be light-transmitting or opaque, i.e., the optical decorative film may be wholly or partly light-transmitting. For the form of overall light transmission, the film can be divided into a light-focusing area and a non-light-focusing light-transmitting area: for a partially light-transmitting form, the film may be first divided into a light-transmitting area and a non-light-transmitting area, and then the light-transmitting area is subdivided into a light-focusing area and a non-light-focusing area.

Taking the beacon pattern shown in FIG. 8 as an example, the beacon pattern may be divided into an area P1 and an area P2 having different coverage areas, and the peripheral area not covered by the beacon pattern may be divided into an area P3. In an alternative embodiment, both the area P1 and the area P2 may be configured as light-focusing areas and have an increased light transmittance compared to the area P3, so that the beacon pattern composed of the area P1 and the area P2 is significantly distinguished from the peripheral area in the backlight state. Conversely, in some embodiments, the area P3 may be configured as a light-focusing area and have an increased light transmittance compared to areas PI and P2, so that in the backlight state, the beacon pattern can also be distinguished significantly from the peripheral area due to the lower light transmittance. In some embodiments, the area PI and the area P2 have different light transmittance from each other while constituting the light-focusing area. Thus, in the backlight state, the areas P1 and P2 of different degrees of appearance can present a stereoscopic-like visual effect, or a dynamic visual effect by a state change of the light source. In some embodiments, the light-focusing and non-light-focusing areas can present an opposite state when illuminated with an external light source, i.e., the light-focusing area has a dark gloss and the non-light-focusing area has a strong gloss. In this regard, when the optical decorative film has a plurality of beacon patterns or a plurality of light-focusing areas, the above-described pluralistic decorative effects are more easily achieved, effectively enriching the decorative effect of the film and the user's sensory experience.

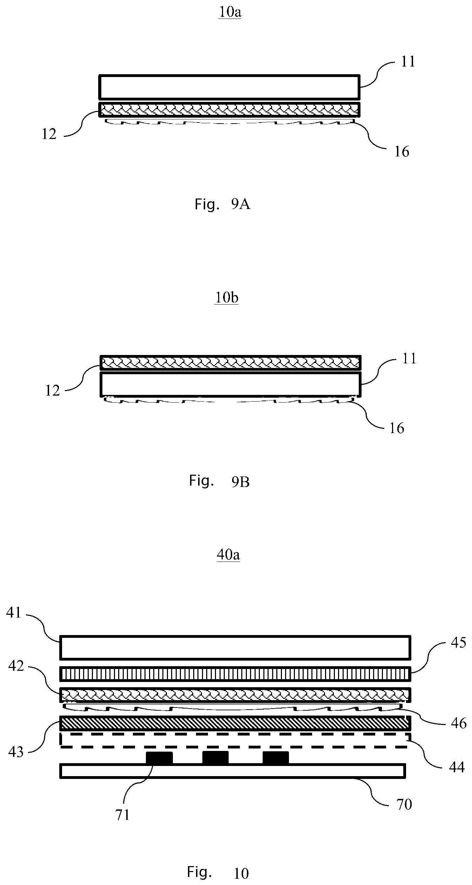

In some embodiments, the light-focusing structure includes a micro-nano lens which may be attached to a surface of any one of a textured structure, a base layer, and a plating layer, and incident light is focused in the light-focusing area by the micro-nano lens. As an alternative, the micro-nano lens includes any one of a convex lens, a concave lens, and a Fresnel lens. FIGS. 9A and 9B show different embodiments of a light-focusing structure based on the optical decorative film shown in FIG. 2, respectively. In the optical decorative film 10a shown in FIG. 9A, the micro-nano lens is a Fresnel lens 16 formed on the surface of the textured structure 12 by UV adhesive transfer or imprinting, thereby providing a focusing effect of light on the textured structure 12, thereby improving the light transmittance of the film. The Fresnel lenses emit light more uniformly and at a lower cost than, for example, the convex lenses do. Alternatively, in the optical decorative film 10b shown in FIG. 9B, the Fresnel lens 16 may also be formed on a surface of the base layer 11 by UV adhesive transfer or imprinting. Regardless of how the Fresnel lens 16 is arranged, it functions to focus the incident light emitted by the backlight source towards the upper surface (observing surface) of the film.

In some embodiments, the Fresnel lens may be attached to the surface of any one of the textured structure, the base layer, and the plating layer by means of secondary transfer. By way of example, the textured structure may be formed on the base layer by UV adhesive transfer or imprinting, and then the Fresnel lens may be formed on the textured structure by UV adhesive transfer or imprinting.

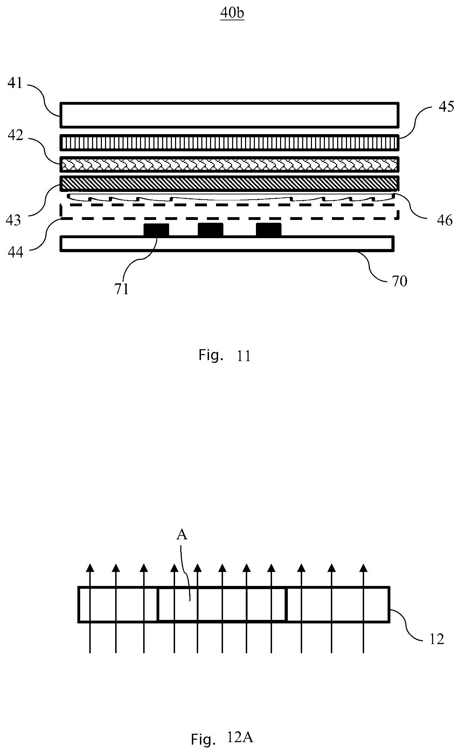

In FIGS. 10 and 11, examples of an optical trim assembly applied to the interior of a vehicle are shown based on the optical decorative film shown in FIG. 5, respectively, where the optical trim assembly has a backlight source, and the backlight source 70 is arranged at a side away from an observer, so that light emitted from the backlight source 70 passes through the optical decorative film to present a texture effect and/or pattern and/or color on the upper surface of the optical decorative film, i.e., above the optical decorative film 40a of FIG. 10 or the optical decorative film 40b of FIG. 11. The backlight source is, for example, a point-like or line-like light source, for example a light emitting diode (LED) bead or an LED light strip, and one or more LED beads may be arranged as desired. Three LEDs 71 arranged on a PCB board are exemplarily shown in e.g., FIG. 10 or FIG. 11. In addition, combined with the design and control of the backlight source 70, such as the lighting state and/or color and/or light intensity and/or lighting time of one or more LEDs, not only can the above-described various rich and changeable optical effects be realized, but also can be separately or simultaneously lit to realize dynamic/static lighting effects, such as running water, flickering, breathing, sense of depth, etc., which can further enrich the lighting effect and meet the needs of certain specific scene atmospheres.

In the optical decorative film 40a shown in FIG. 10, a Fresnel lens 46 is attached to the surface of the textured structure 42 between the textured structure 42 and the plating layer 43, similar to the embodiment as shown in FIG. 9A. Due to the light transmittance of the base layer 41 and the color layer 45, the light emitted from the backlight source 70, after passing through the Fresnel lens and the respective film layers, can present different surface effects on the focusing area of the upper surface of the optical decorative film and the peripheral area of the focusing area.

In the optical decorative film 40b shown in FIG. 11, a Fresnel lens 46 is attached to the surface of the plating layer 43 between the plating layer 43 and the pattern layer 44, unlike the embodiment as shown in FIG. 10. Similarly, the Fresnel lens 46 may be formed by UV adhesive transfer or imprinting, after the light emitted from the backlight source 70 of the plating layer 430 passes through the optical decorative film 40b, so that different surface effects can be presented area of the upper surface of the optical decorative film and the peripheral area of the focusing area. In this structure design, in order to prevent the ink of the pattern layer 44 from filling the zigzag grooves of the Fresnel lens 46 to affect the light-focusing effect, the final optical decorative film can be formed by filling the zigzag grooves with UV adhesive of different characteristics or by brushing the ink after filling the zigzag grooves with a micro-nano coating by vacuum plating.

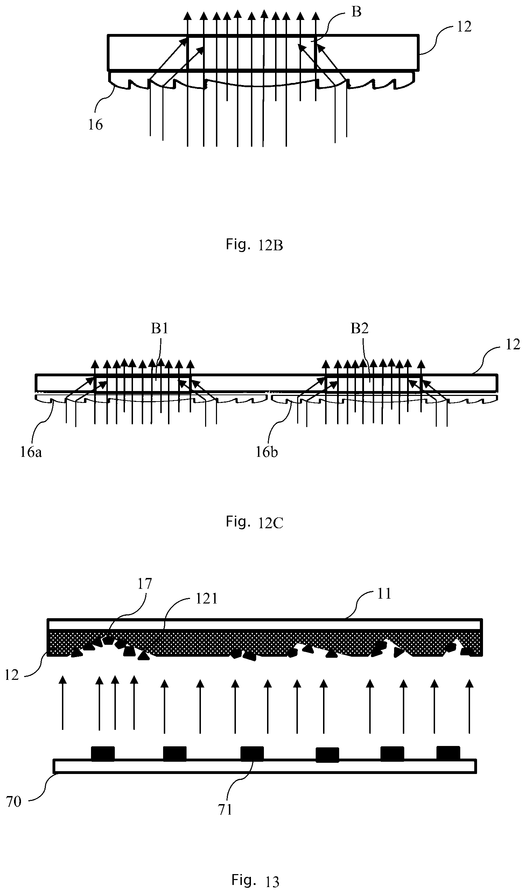

To understand the focusing effect of a micro-nano lens in the form of a Fresnel lens more clearly, taking the textured structure 12 as an example, FIG. 12A shows a schematic diagram showing light passing directly through the textured structure 12 as indicated by the arrows in the figure. As such, the optical effect at area A does not differ from the optical effect at the peripheral area under the same design of the portions of the textured structure 12. When the Fresnel lens 16 is used, as shown in FIG. 12B, one surface of the lens surface of the Fresnel lens 16 is a light surface, and the other surface has a small to large concentric circle, which is composed of a series of zigzag grooves when viewed in cross section, and the central part is an elliptical arc line, where the angle between each groove and an adjacent groove is different, but the lights are focused at one point to form a central focal point, that is, the focal point of the lens, so that the incident light, after being refracted by the Fresnel lens 16, converges to a specific area B, where a light-focusing area is formed. In this manner, the position, number, size, etc. of the Fresnel lenses can be varied for different needs with respect to the textured structure 12 to increase the light transmittance of a particular area, thereby presenting different surface effects on the surface of the texture. For example, rather than having approximately the same light transmittance throughout the entire area of the textured structure, only the light-focusing area is provided in the beacon area where high light transmittance is desired. FIG. 12C shows an embodiment in which a plurality (e.g., two) Fresnel lenses 16a, 16b are disposed on the textured structure 12 to form two corresponding light-focusing areas B1, B2, respectively, on the textured structure 12. As such, it is also possible to achieve different light transmittance in different areas by means of differently designed Fresnel lenses, so that a greater level of surface effect is obtained.

In addition to the use of micro-nano lenses, such as Fresnel lenses, the light-focusing structure may also include micro-nano particles attached to at least a local area of the textured structure, which may include, by way of example, injection-molded particles, metal particles, glass particles, etc. such as may be obtained using metallic inks, or tiny transparent glass beads, etc. As illustrated in FIG. 13, the textured structure 12 in the form of UV adhesive is formed with a plurality of grooves 121, and the shape and/or size of each of the grooved are the same or different. It will be appreciated that the smaller the depth of the grooves or the smaller the surface area, the higher the light transmission. In some embodiments, the grooves 121 of each micro-nano structure may be filled with high-bright micro-nano particles. Through the structural features of the micro-nano structure, the micro-nano particles can perform a light-focusing function when the film is in the case of a backlight, thereby achieving a local brightening effect of the micro-nano texture of the film. The tiny glass beads may be multi-shaped, such as 3-faceted, 4-faceted, 5-faceted, etc. with at least one faceted structural feature, and the shapes may be the same or different.

As mentioned above, the light-focusing structures can also be obtained by structural design of the structural layers themselves in the film. Specifically, the light-focusing structure is obtained by forming on any one of a textured structure, a base layer, and a plating layer.

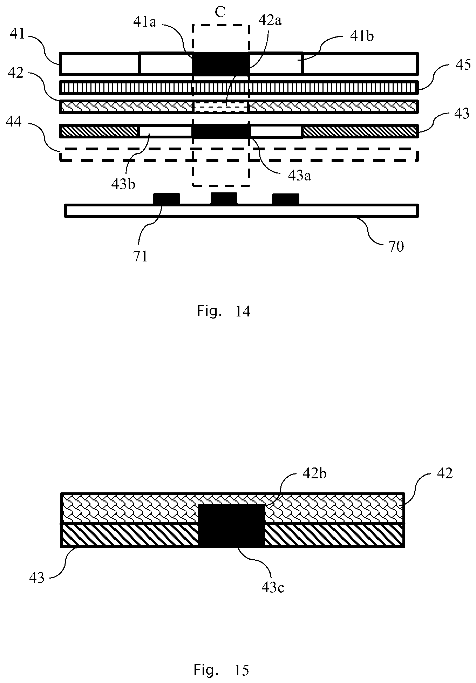

In some embodiments, as shown in FIG. 14, the textured structure 42 is formed with a light-focusing area 42a, the textured structure of the light-focusing area 42a is less than that of the peripheral area, or the light-focusing area 42a has no textured structure, thereby achieving local high light transmission, and the peripheral area can achieve high reflection, thereby significantly presenting the texture effect of the peripheral area.

In some embodiments, as also shown in FIG. 14, the plating layer 43 is formed with a light-focusing area 43a having a local high light transmittance, and the light transmittance of the light-focusing area 43a is greater than that of the peripheral area 43b. This can be distinguished by media filling of different light transmittance. In some embodiments, as described above, the plating layer may be a single-layer film or may be formed from a stack of a plurality of film layers. When the plating film layer is a single-layer film, a local area of the single-layer film is an oxide medium, and a peripheral area is a metal medium or a mixed medium of the metal medium and the oxide medium. Local areas of oxide media can also achieve a metallic gloss effect, but have a higher light transmission rate so that, for example, beacon patterns can be formed. For other e.g., texture areas where a high reflection is desired, a metal medium or a mixed medium of a metal medium and an oxide medium may still be used, enabling an increased reflection of external light, thereby enhancing the texture effect. When the plating film layer is a plurality of film layers, the plurality of film layers include at least one layer of an oxide medium and at least one layer of a metal medium or a mixed medium of a metal medium and an oxide medium, the above-mentioned effects can also be obtained.

In some embodiments, the light-focusing area 43a with locally high light transmittance of the plating layer 43 can be obtained by a deplating process. For example, after plating the metal dielectric film using a conventional process, the metal dielectric of the desired light transmitting area portion is etched away using a stripping process and then filled with the oxide dielectric film, thereby forming the light-focusing area 43a. Alternatively, the desired light-focusing area can also be obtained by masking local areas during plating and then partially filling with coating of a different medium, so that the overall film layer locally has a high light transmittance.

It can also be seen from FIG. 14 that the base layer 41 may also be formed thereon with a light-focusing area 41a having a high light transmittance compared to the peripheral area 41b. For example, the material of the light-focusing area 41a has a higher light transmittance than that of the peripheral area 41b, or the light-focusing area 41a is formed by opening. As such, in conjunction with the design of the light-focusing area on the textured structure 42 and the plating layer 43, the light-focusing area C of the optical decorative film as a whole can substantially penetrate from the plating layer 43 near the backlight source 70 to the base layer 41, and the light emitted from the backlight source 70 presents different surface effects on different areas on the upper surface of the optical decorative film.

FIG. 15 also shows a light-focusing area formed over both the textured structure and the plating layer. In this embodiment, the light-focusing area includes an open groove formed on the textured structure 42 to form a first light-focusing area 42b, and a second light-focusing area 43c formed on the plating layer 43, where the second light-focusing area 43c corresponds to the position of the first light-focusing area 42b and the material of the second light-focusing area 43c is embedded in the first light-focusing area 42b. Similarly, the light transmittance of the material of the second light-focusing area 43c is greater than the light transmittance of the material of the peripheral area, for example, the material of the second light-focusing area 43c is filled with an oxide medium, and the material of the peripheral area is a metal medium or a mixed medium of a metal medium and an oxide medium. Although the open groove forming the first light-focusing area 42b in FIG. 15 is a blind groove, i.e., the groove does not extend through the textured structure 42, in some embodiments the open groove may also be a through groove.

With an understanding of the various embodiments described above and the various possible embodiments which are not described in detail herein, the optical decorative film of the present invention can achieve different illumination effects in different areas by providing the film with a textured structure and a light-focusing structure so that a light source irradiates the film in an external ambient light irradiation state and in an lighting state when a backlight source is provided, in particular, by designing a micro-nano lens structure and a plating layer structure on a film layer, the overall light transmittance of the film is greatly improved, and the brightness of the film is improved, thereby creating a multilayered and diversified decorative effect different from the prior art. Depending on different application requirements and application scenes, the optical decorative film of the present invention can provide at least one of the following optical effects: : (a) a projection effect and/or a decorative effect and/or a color effect and/or a pattern effect and/or a surface effect provided by the optical decorative film, and/or (b) a depth-of-field effect and/or a decorative effect and/or a color effect and/or a pattern effect and/or a surface effect provided by an upper surface of the optical decorative film, and/or (c) an illumination effect provided by the backlight source, and/or (d) light emitted by the backlight source transmits the illumination effect provided by the optical decorative film, and/or (e) the illumination effect provided by the light emitted by the backlight source through the optical decorative film and the upper surface, and/or (f) a daytime effect, and/or (g) a night effect.

It should be understood herein that the embodiments shown in the drawings show only alternative architectures, shapes, dimensions and arrangements of the various optional components of the optical decorative film and optical trim assembly according to the present invention, however, they are merely illustrative and not limiting, and other shapes, dimensions and arrangements may be adopted without departing from the spirit and scope of the present invention.

It should be noted that the present invention (e.g., inventive concepts, etc.) has been described in the specification of this patent document and/or shown in the figures according to exemplary embodiments; the embodiments of the present invention are presented by way of example only and are not intended to be limiting the scope of the present invention. The structure and/or arrangement of the elements of the inventive concepts embodied in the present invention as described in the specification and/or shown in the figures is merely illustrative. Although exemplary embodiments of the present invention have been described in detail in this patent document, it will be readily understood by a person skilled in the art that equivalents, modifications, variations, etc. of the subject matter of the exemplary embodiments and alternative embodiments are possible and are considered to be within the scope of the present invention; all such subject matter (e.g., modifications, variations, embodiments, combinations, equivalents, etc.) are intended to be included within the scope of the present invention. It should also be noted that various/other modifications, variations, substitutions, equivalents, changes, omissions, etc. may be made in the configuration and/or arrangement of the exemplary embodiments (e.g., in terms of concept, design, structure, apparatus, form, assembly, construction, means, functions, systems, processes/methods, steps, sequence of process/method steps, operations, operating conditions, properties, materials, compositions, combinations, etc.)). Without departing from the scope of the present invention; all such subject matter (e.g., modifications, variations, embodiments, combinations, equivalents, etc.) are intended to be included within the scope of the present invention. The scope of the present invention is not intended to be limited to the subject matter (e.g., details, structures, functions, materials, behaviors, steps, sequences, systems, results, etc.) described in the specification and/or figures of this patent document. Considering that the claims of this patent document are to be properly construed to cover the full scope of the inventive subject matter (e.g., including any and all such modifications, variations, embodiments, combinations, equivalents, etc.): it is to be understood that the terminology used in this patent document is intended to provide a description of the subject matter of exemplary embodiments and is not intended as a limitation on the scope of the present invention.

It should also be noted that, according to the exemplary embodiments, the present invention may include conventional techniques (e.g., techniques embodied and/or integrated in the exemplary embodiments, modifications, variations, combinations, equivalents), or may include any other applicable techniques (present and/or future) having the ability to perform the functions and processes/operations described in the specification and/or shown in the figures. All of these techniques (e.g., techniques implemented in the form of embodiments, modifications, variations, combinations, equivalents, etc.) are considered to be within the scope of the present invention in this patent document.

## Claims

1. An optical decorative film for vehicles, wherein the optical decorative film comprises:
- a base layer;
- a textured structure; and
- a light-focusing structure;
wherein at least a local area on an upper surface of the optical decorative film is configured as a light-focusing area, and light emitted by a backlight source located below the optical decorative film passes through the light-focusing structure, so that the light-focusing area has increased light transmittance compared to the peripheral area of the light-focusing area, so as to present different surface effects on the upper surface of the optical decorative film.

2. The optical decorative film according to claim 1,
wherein a peripheral area of the light-focusing area is light-transmissive or opaque.

3. The optical decorative film according to claim 1,
wherein an upper surface of the optical decorative film is provided with a plurality of light-focusing areas each having the same or different light transmittance.

4. The optical decorative film according to claim 3,
wherein regional area of an upper surface of the optical decorative film covered by each of the light-focusing areas is the same or different.

5. The optical decorative film according to claim 1,
wherein the textured structure comprises an optical adhesive attached to the base layer by transfer or imprinting.

6. The optical decorative film according to claim 1,
wherein the textured structure is formed on one surface of the base layer.

7. The optical decorative film according to claim 1,
wherein the light-focusing area is formed on the textured structure, the light-focusing area has less textured structures than that of the peripheral area, or the light-focusing area has no textured structure.

8. The optical decorative film according to claim 1,
further comprises a plating layer attached to a surface of the textured structure.

9. The optical decorative film according to claim 8,
wherein the light-focusing structure is formed in any one of the textured structure, the base layer, and the plating layer.

10. The optical decorative film according to claim 9,
wherein the light-focusing structure comprises at least one of: (1) a micro-nano lens; and (2) a type of micro-nano particles attached to at least a local area of the textured structure.

11. The optical decorative film according to claim 10,
wherein the micro-nano lens is attached to a surface of any one of the textured structure, the base layer, and the plating layer.

12. The optical decorative film according to claim 10,
wherein the micro-nano lens comprises any one of a convex lens, a concave lens, and a Fresnel lens.

13. The optical decorative film according to claim 10,
wherein the micro-nano lens is a Fresnel lens attached to a surface of any one of the textured structure, the base layer, and the plating layer by optical adhesive transfer or imprinting or secondary transfer.

14. The optical decorative film according to claim 10,
wherein the micro-nano particles comprise injection molding particles, metal particles, and glass particles.

15. The optical decorative film according to claim 8,
wherein the plating layer comprises a single-layer film or is formed by laminating a plurality of film layers.

16. The optical decorative film according to claim 15,
wherein when the plating film layer is the single-layer film, a local area of the single-layer film is an oxide medium, and a peripheral area of the local area is a metal medium or a mixed medium of a metal medium and an oxide medium; when the plating film layer is formed by a plurality of film layers, the plurality of film layers comprise at least one layer of an oxide medium and at least one layer of a metal medium or a mixed medium of a metal medium and an oxide medium.

17. The optical decorative film according to claim 15,
wherein the light-focusing area comprises an open groove formed on the textured structure to form a first light-focusing area, and a second light-focusing area formed on the plating layer, the position of the second light-focusing area corresponds to the position of the first light-focusing area and the material of the second light-focusing area is embedded in the first light-focusing area.

18. The optical decorative film according to claim 1,
wherein the base layer is formed with a light-focusing area having a higher light transmittance compared to that of a peripheral area, or the light-focusing area is formed by means of opening.

19. The optical decorative film according to claim 1,
wherein the textured structure comprises a plurality of grooves configured to have different depths, shapes or surface areas.

20. The optical decorative film according to claim 1,
wherein the surface effect comprises at least one of brushed texture, grid texture, gradient texture, starry sky texture, imitation stone texture, wood grain texture, fabric texture, landscape texture, crystal texture, lens texture, stereoscopic relief, characters, graphics, symbols, numbers, beacons, and trademarks.

21. The optical decorative film according to any one of claims 1 to 20,
wherein the optical decorative film provides at least one of the following optical effects:
(a) a projection effect and/or a decorative effect and/or a color effect and/or a pattern effect and/or a surface effect provided by the optical decorative film, and/or
(b) a depth-of-field effect and/or a decorative effect and/or a color effect and/or a pattern effect and/or a surface effect provided by an upper surface of the optical decorative film, and/or
(c) an illumination effect provided by the backlight source, and/or
(d) the illumination effect provided by light emitted by the backlight source transmitting through the optical decorative film, and/or
(e) the illumination effect provided by the light emitted by the backlight source transmitting through the optical decorative film and the upper surface, and/or
(f) a daytime effect, and/or
(g) a night effect.

22. An optical trim assembly used for the interior of a vehicle, wherein the optical trim assembly comprises the optical decorative film according to any one of claims 1 to 21, and a substrate, wherein the substrate is attached to at least one surface of the optical decorative film by integral injection molding or optical adhesive.

23. The optical trim assembly used for interior of a vehicle according to claim 22, further comprising a backlight source arranged on a side of the substrate remote from an observer, the backlight source emitting light through the optical decorative film to present different surface effects in a light-focusing area and a peripheral area of the optical decorative film.
